(19) Europäisches Patentamt
European Patent Office
Office européen des brevets

(11) Veröffentlichungsnummer: **0 501 175 A1**

(12) # EUROPÄISCHE PATENTANMELDUNG

(21) Anmeldenummer: **92101747.1**

(22) Anmeldetag: **03.02.92**

(51) Int. Cl.5: **C08L 71/12**, C08L 77/00, C08K 7/04, //(C08L77/00,71:12, C08K7:04),(C08L71/12,77:00, C08K7:04)

(30) Priorität: **28.02.91 DE 4106262**

(43) Veröffentlichungstag der Anmeldung: **02.09.92 Patentblatt 92/36**

(84) Benannte Vertragsstaaten: **BE DE FR GB NL**

(71) Anmelder: **BASF Aktiengesellschaft**
**Carl-Bosch-Strasse 38**
**W-6700 Ludwigshafen(DE)**

(72) Erfinder: **Muehlbach, Klaus,Dr.**
**Im Zaunruecken 20**
**W-6718 Gruenstadt(DE)**
Erfinder: **Theysohn, Rainer,Dr.**
**Am Bruch 38**
**W-6710 Frankenthal(DE)**
Erfinder: **Hofmann, Juergen**
**Muenchbuschweg 30 c**
**W-6700 Ludwigshafen(DE)**
Erfinder: **Steiert, Peter,Dr.**
**Madenburgstrasse 10**
**W-6700 Ludwigshafen(DE)**

(54) **Faserverstärkte thermoplastische Formmassen.**

(57) Faserverstärkte thermoplastische Formmassen, erhältlich durch Aufschmelzen von

A) 65 bis 95 Gew.-% einer mehrphasigen Polymermischung mit guter Phasenhaftung, enthaltend als wesentliche Komponenten

$a_1$) 20 bis 78 Gew.-% eines thermoplastischen Polyamids

$a_2$) 20 bis 78 Gew.-% eines Polyphenylenethers

$a_3$) 2 bis 15 Gew.-% eines schlagzäh modifizierenden Polymeren

$a_4$) 0 bis 35 Gew.-% eines Haftvermittlers

$a_5$) 0 bis 20 Gew.-% eines Flammschutzmittels

und anschließender Einarbeitung von

B) 5 bis 35 Gew.-% Glas- oder Kohlenstoffasern, wobei die mittlere Faserlänge der Komponente B) nach der Einarbeitung 100 bis 400 µm beträgt.

EP 0 501 175 A1

Die vorliegende Erfindung betrifft faserverstärkte thermoplastische Formmassen, erhältlich durch Aufschmelzen von

A) 65 bis 95 Gew.-% einer mehrphasigen Polymermischung mit guter Phasenhaftung, enthaltend als wesentliche Komponenten

$a_1$) 20 bis 78 Gew.-% eines thermoplastischen Polyamids

$a_2$) 20 bis 78 Gew.-% eines Polyphenylenethers

$a_3$) 2 bis 15 Gew.-% eines schlagzäh modifizierenden Polymeren

$a_4$) 0 bis 35 Gew.-% eines Haftvermittlers

$a_5$) 0 bis 20 Gew.-% eines Flammschutzmittels

und anschließender Einarbeitung von

B) 5 bis 35 Gew.-% Glas- oder Kohlenstoffasern, wobei die mittlere Faserlänge der Komponente B) nach der Einarbeitung 100 bis 400 $\mu$m beträgt.

Außerdem betrifft die Erfindung Verfahren zur Herstellung dieser faserverstärkten thermoplastischen Formmassen, deren Verwendung zur Herstellung von Formkörpern sowie die hierbei erhältlichen Formkörper aus den faserverstärkten thermoplastischen Formmassen als wesentliche Komponenten.

Faserverstärkte thermoplastische Formmassen finden aufgrund ihres Eigenschaftsprofils in weiten Bereichen Verwendung, beispielsweise für Kfz-Teile, Sportgeräte sowie für elektronische und elektrische Gerätebauteile.

Faserverstärkte thermoplastische Formmassen auf der Basis von Polymermischungen aus Polyamiden und Polyphenylenethern sind beispielsweise aus der EP-A 24 120, WO-A 85/5372, WO-A 87/5311, DE-A 37 02 582 und EP-A 302 485 bekannt. Hierbei werden alle Einsatzstoffe gemeinsam in der Schmelze gemischt. Derartige Formmassen weisen zwar eine gute Zähigkeit auf, jedoch sind sowohl die Festigkeit als auch die Reißdehnung unbefriedigend.

In der EP-A 369 312 und der EP-A 369 313 werden Verbundwerkstoffe beschrieben, die durch Imprägnieren von Glasfasern mit einer Schmelze von Thermoplasten, Polyamiden, einem niedermolekular gesättigten bzw. aromatischen Carbonsäureamid und gegebenenfalls einem Haftvermittler erhalten werden. Überträgt man dieses Prinzip auf kurzglasfaserverstärkte Thermoplaste, so erhält man Formmassen, deren Festigkeit, Zähigkeit und Reißdehnung nicht zufriedenstellend sind.

Der Erfindung lag daher die Aufgabe zugrunde, faserverstärkte thermoplastische Formmassen mit guter Zähigkeit, Festigkeit und Reißdehnung zur Verfügung zu stellen.

Die Aufgabe wird erfindungsgemäß durch die eingangs definierten faserverstärkten thermoplastischen Formmassen gelöst. Bevorzugte Massen dieser Art sind den Unteransprüchen zu entnehmen.

Weiterhin wurden Verfahren zur Herstellung dieser faserverstärkten thermoplastischen Formmassen, deren Verwendung zur Herstellung von Formkörpern sowie die hierbei erhältlichen Formkörper gefunden.

Als Komponente A) enthalten die erfindungsgemäßen faserverstärkten thermoplastischen Formmassen 65 bis 95 Gew.-%, bevorzugt 68 bis 92 Gew.-%, einer mehrphasigen Polymermischung mit guter Phasenhaftung, enthaltend als wesentliche Komponenten

$a_1$) 20 bis 78 Gew.-%, bevorzugt 25 bis 70 Gew.-%, insbesondere 35 bis 60 Gew.-% eines thermoplastischen Polyamids

$a_2$) 20 bis 78 Gew.-%, bevorzugt 25 bis 63 Gew.-%, insbesondere 28 bis 60 Gew.-% eines Polyphenylenethers

$a_3$) 2 bis 15 Gew.-%, bevorzugt 2 bis 12 Gew.-%, eines schlagzäh modifizierenden Polymeren

$a_4$) 0 bis 35 Gew.-%, bevorzugt 0 bis 20 Gew.-%, insbesondere 0 bis 15 Gew.-% eines Haftvermittlers

$a_5$) 0 bis 20 Gew.-%, bevorzugt 0 bis 10 Gew.-%, insbesondere 0 bis 7,5 Gew.-% eines Flammschutzmittels.

Die als Komponente $a_1$) verwendeten Polyamide sind an sich bekannt und umfassen die teilkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von $\omega$-Aminocarbonsäuren oder Polymerisation von Lactamen hergestellt werden.

Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam (Nylon 6), Polylaurinsäurelactam, ferner Poly-11-aminoundecansäure und ein Polyamid aus Di(p-aminocyclohexyl)-methan- und Dodecandisäure.

Es ist auch möglich, gemäß der Erfindung Polyamide zu verwenden, die durch Copolykondensation von zwei oder mehr der obengenannten Polymeren oder ihrer Komponenten hergestellt worden

sind, z.B. Copolymere aus Adipinsäure, Isophthalsäure oder Terephthalsäure und Hexamethylendiamin (Polyamid 66/6T) oder Copolymere aus Caprolactam, Terephthalsäure und Hexamethylendiamin (Polyamid 6/6T). Derartige teilaromatische Copolyamide enthalten 40 bis 90 Gew.-% Einheiten, die sich von Terephthalsäure und Hexamethylendiamin ableiten. Ein geringer Anteil der Terephthalsäure, vorzugsweise nicht mehr als 20 Gew.-% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von $\epsilon$-Caprolactam ableiten und/oder Einheiten, die sich von Adipinsäure und Hexamethylendiamin ableiten.

Der Anteil an Einheiten die sich von $\epsilon$-Caprolactam ableiten, beträgt bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von $\epsilon$-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.-% beträgt, vorzugsweise mindestens 20 Gew.-%. Das Verhältnis der Einheiten, die sich von $\epsilon$-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten und 20 bis 50, vorzugsweise 25 bis 40 Gew.-% Einheiten, die sich von $\epsilon$-Caprolactam ableiten, erwiesen.

Die Herstellung der teilaromatischen Copolyamide kann z.B. nach dem in den EP-A-129 195 und EP 129 196 beschrienen Verfahren erfolgen.

Bevorzugt werden lineare Polyamide mit einem Schmelzpunkt über 200 ° C.

Bevorzugte Polyamide sind Polyhexamethylenadipinsäureamid, Polyhexamethylensebacinsäureamid und Polycaprolactam sowie Polyamid 6/6T und Polyamid 66/6T. Die Polyamide weisen im allgemeinen eine relative Viskosität von 2,0 bis 5 auf, bestimmt an einer 1 gew.%igen Lösung in 96 %iger Schwefelsäure bei 23 ° C, was einem Molekulargewicht von etwa 15 000 bis 45 000 entspricht. Polyamide mit einer relativen Viskosität von 2,4 bis 3,5, insbesondere 2,5 bis 3,4 werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Die als Komponente $a_2$) verwendeten Polyphenylenether können unmodifiziert oder modifiziert sein; Mischungen aus unmodifizierten und modifizierten Polyphenylenethern sind ebenfalls geeignet. Bevorzugt sind modifizierte Polyphenylenether und Mischungen, die 55 bis 95 Gew.-% modifizierten Polyphenylenether enthalten.

Die Polyphenylenether weisen im allgemeinen ein Molekulargewicht (Gewichtsmittelwert) im Bereich von 10 000 bis 80 000, vorzugsweise von 20 000 bis 60 000 auf.

Dies entspricht einer reduzierten spezifischen Viskosität $\eta_{red}$ von 0,2 bis 0,9 dl/g, vorzugsweise von 0,35 bis 0,8 und insbesondere 0,45 bis 0,6, gemessen in einer 1 gew.%igen Lösung in Chloroform bei 25 ° C nach DIN 53 726.

Die unmodifizierten Polyphenylenether sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Die als Komponente $a_2$) verwendeten Polyphenylenether können gegebenenfalls verfahrensbedingte Fehlstellen enthalten, die beispielsweise bei White et al., Macromolecules 23, 1318-1329 (1990) beschrieben sind.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylen)ether,Poly(2,6-diphenyl-1,4-phenylen)ether, Poly(2,6-dimethoxi-1,4-phenylen)-ether, Poly(2,6-diethoxi-1,4-polyphenylen)ether, Poly(2-methoxi-6-ethoxi-1,4-phenylen)ether, Poly(2-ethyl-6-stearyloxi-1,4-phenylen)ether, Poly(2,6-dichlor-1,4-phenylen)ether, Poly(2-methyl-6-phenylen-1,4-phenylenether, Poly(2,6-dibenzyl-1,4-phenylen)ether, Poly(2-ethoxi-1,4-phenylen)ether, Poly(2-chlor-1,4-phenylen)ether, Poly(2,5-dibrom-1,4-phenylen)ether. Bevorzugt werden Polyphenylenether eingesetzt, bei denen die Substituenten Alkylreste mit 1 bis 4 Kohlenstoffatomen sind, wie Poly(2,6-dimethyl-1,4-phenylen)ether, Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)-ether und Poly(2-ethyl-6-propyl-1,4-phenylen)ether.

Weiterhin sind Pfropfcopolymere aus Polyphenylenether und vinylaromatischen Polymeren wie Styrol, $\alpha$-Methylstyrol, Vinyltoluol und Chlorstyrol geeignet.

Funktionalisierte oder modifizierte Polyphenylenether sind an sich bekannt, z.B. aus WO-A 86/02086, WO-A 87/00540, EP-A-222 246, EP-A-223 116 und EP-A-254 048.

Üblicherweise wird ein unmodifizierter Polyphenylenether durch Einbau

mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit mit dem Polyamid (Komponente $a_1$) gewährleistet ist.

Die Modifizierung wird im allgemeinen durch Umsetzung eines unmodifizierten Polyphenylenethers $a_{21}$) mit einem Modifiziermittel, das mindestens eine der oben genannten Gruppen und mindestens eine C-C-Doppel- oder C-C-Dreifachbindung enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Geeignete Modifiziermittel ($a_{23}$) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$- bis $C_8$-Alkanolen ($a_{231}$), die Mono- oder Diamide dieser Säuren wie N-Phenylmaleinimid (Monomere $a_{232}$), Maleinhydrazid. Weiterhin seien beispielsweise N-Vinylpyrrolidon und (Meth)acryloylcaprolactam ($a_{233}$)) genannt. Eine andere Gruppe von Modifiziermitteln umfaßt beispielsweise das Säurechlorid des Trimelithsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure.

Bevorzugt wird in den erfindungsgemäßen Formmassen als Komponente $a_2$) ein modifizierter Polyphenylenether eingesetzt, der durch Umsetzen von

$a_{21}$)9,94 bis 99,94 Gew.-% eines unmodifizierten Polyphenylenethers,

$a_{22}$)0 bis 88 Gew.-% eines vinylaromatischen Polymeren,

$a_{23}$)0,05 bis 10 Gew.-% mindestens einer Verbindung aus der Gruppe gebildet aus

$a_{231}$)einer $\alpha,\beta$-ungesättigten Dicarbonylverbindung,

$a_{232}$)eines Amid-Gruppen enthaltenden Monomeren mit einer polymerisierbaren Doppelbindung und

$a_{233}$)eines Lactam-Gruppen enthaltenden Monomeren mit einer polymerisierbaren Doppelbindung,

$a_{24}$)0 bis 80 Gew.-% weiterer pfropfaktiver Monomerer und

$a_{25}$)0,01 bis 0,09 Gew.-% eines Radikalstarters

wobei sich die Gewichtsprozente auf die Summe von $a_{21}$) bis $a_{25}$) beziehen, im Verlaufe von 0,5 bis 15 Minuten bei 240 bis 375 °C in geeigneten Misch- und Knetaggregaten wie Zweischneckenextrudern erhältlich ist.

Das vinylaromatische Polymer $a_{22}$) soll vorzugsweise mit dem eingesetzten Polyphenylenether verträglich sein.

Das Molekulargewicht dieser an sich bekannten Polymeren liegt im allgemeinen im Bereich von 1500 bis 2 000 000, vorzugsweise im Bereich von 70 000 bis 1 000 000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, $\alpha$-Methylstyrol und p-Methylstyrol genannt; in untergeordneten Anteilen (vorzugsweise nicht mehr als 20, insbesondere nicht mehr als 8 Gew.-%), können auch Comonomere wie (Meth)-acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Gegebenenfalls können bei der Herstellung des modifizierten Polyphenylenethers auch weitere Comonomere $a_{24}$) eingesetzt werden, die unter den Herstellungsbedingungen mit den Komponenten $a_{21}$) und gegebenenfalls $a_{22}$) reagieren bzw. auf

diese aufpfropfen. Beispielsweise seien hier Acrylsäure, Methacrylsäure, Acrylate, Methacrylate und vinylaromatische Monomere wie Styrol, α-Methylstyrol und Vinyltoluol genannt, um nur einige aufzuführen.

Der Anteil der Komponente $a_{24}$) beträgt 0 bis 80, vorzugsweise 0 bis 45 und insbesondere nicht mehr als 20 Gew.-%, bezogen auf die Summe der Komponenten $a_{21}$) bis $a_{25}$). Besonders bevorzugt werden Formmassen, die keine Komponente $a_{24}$) enthalten.

Als Radikalstarter $a_{25}$) seien genannt:
Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Ditert.-butylperoxybutan, Dicumylperoxid, tert.-Butylcumylperoxid, 1,3-Di(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur

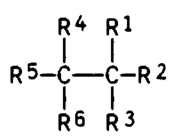

wobei $R^1$ bis $R^6$ Alkylgruppen mit 1 bis 8 C-Atomen, Alkoxygruppen mit 1 bis 8 C-Atomen, Arylgruppen wie Phenyl, Naphthyl oder 5- oder 6-gliedrige Heterocyclen mit einem π-Elektronensystem und Stickstoff, Sauerstoff oder Schwefel als Heteroatomen darstellen. Die Substituenten $R^1$ bis $R^6$ können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Als Komponente $a_3$) werden die üblichen zur Verbesserung der Zähigkeit von Polyamiden oder Polyphenylenethern eingesetzten schlagzäh modifizierenden Polymeren (auch Schlagzähmodifier, Elastomere oder Kautschuke genannt) verwendet.

Als Kautschuke, die die Zähigkeit von Polyphenylenethern erhöhen, seien z.B. folgende genannt: Polyoctenylene, Pfropfkautschuke mit einem vernetzten, elastomeren Kern, der beispielsweise von Butadien, Isopren oder Alkylacrylaten abgeleitet ist und einer Pfropfhülle aus Polystyrol, weiterhin Copolymere aus Ethylen und Acrylaten bzw. Methacrylaten sowie die sogenannten Ethylen-Propylen (EP)- und Ethylen-Propylen-Dien (EPDM)-Kautschuke, ferner die mit Styrol gepfropften EP- bzw. EPDM-Kautschuke.

Blockcopolymere mit bis zu sechs, vorzugsweise mit bis zu vier gleichen oder unterschiedlichen Blöcken, die sowohl linear als auch sternförmig (sogenannte Radialblockcopolymere) verbunden sein können, haben sich als besonders geeignet erwiesen.

Bevorzugt werden Blockkautschuke, bei denen mindestens ein Block, vorzugsweise ein Endblock, aus vinylaromatischen Monomeren wie Styrol, α-Methylstyrol, Vinyltoluol, Vinyl- oder Isopropenylnaphthalin aufgebaut ist. Polystyrol als vinylaromatischer Block ist besonders bevorzugt.

Üblicherweise enthalten diese bevorzugten Blockcopolymere weiterhin einen elastomeren Block, der durch eine Glastemperatur von weniger als 0 °C, vorzugsweise von weniger als -30 °C charakterisiert ist. Dieser Block leitet sich z.B. von konjugierten Dienen wie Butadien, Isopren, 1,3-Pentadien oder 2,3-Dimethylbutadien ab. Um Produkte mit guter Dauerwärmeformbeständigkeit zu erhalten, hat es sich als besonders geeignet erwiesen, wenn mindestens 50 %, vorzugsweise mindestens 80 % und insbesondere mindestens 90 % der Doppelbindungen hydriert werden.

Die Übergänge zwischen den einzelnen Blökken können sowohl scharf als auch verschmiert sein.

Vorzugsweise handelt es sich bei den Kautschuken, die die Zähigkeit von Polyphenylenethern erhöhen, um lineare Blockcopolymere der allgemeinen Struktur A-B, A-B-A' oder A-B-A'-B', wobei A und A' den vinylaromatischen Block, vorzugsweise Polystyrol, darstellen und B und B' den elastomeren Block, der vorzugsweise aus Butadien und/oder Isopren - wobei sowohl Butadien als auch Isopren hydriert sein können - aufgebaut ist.

Mischungen aus Blockcopolymeren verschiedener Strukturen, z.B. Mischungen aus Zwei- und Dreiblockcopolymeren oder aus hydrierten und unhydrierten Blockcopolymeren, können ebenfalls eingesetzt werden.

Derart schlagzäh modifizierende Polymere sind an sich bekannt und in der Literatur beschrieben. Nur beispielsweise sei hier auf US-A 4 085 163, US-A 4 041 103, US-A 3 149 182, US-A 3 231 635 und US-A 3 462 162 verwiesen.

Auch im Handel sind entsprechende Produkte erhältlich, z.B. ein Polyoctylen der Bezeichnung Vestenamer® (Hüls AG), sowie eine Vielzahl geeigneter Blockcopolymere mit mindestens einem vinylaromatischen und einem elastomeren Block. Beispielhaft seien die Cariflex®-TR-Typen (Shell), die Kraton®- G-Typen (Shell), die Finaprene®-Typen (Fina) und die Europrene®-SOL-TR-Typen (Enichem) genannt.

Kautschuke, die die Zähigkeit von Polyamiden erhöhen, weisen i.a. zwei wesentliche Merkmale auf: sie enthalten einen elastomeren Anteil, der eine Glastemperatur von weniger als -10 ° C, vorzugsweise von weniger als -30 ° C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien z.B. folgende genannt:
EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25 ° C, unter einem weichen Bestandteil ein Polymerisat mit einer Glastemperatur von höchstens 0 ° C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern $a_3$) sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Als Komponente $a_4$) können die mehrphasigen Polymermischungen A) einen Haftvermittler (auch Phasenvermittler genannt) enthalten. Unter einem

Haftvermittler wird eine Substanz verstanden, die das Mischen zweier nicht verträglicher Polymerisate erleichtert und die Haftung zwischen den Phasen in solchen Systemen verbessert (s. z.B. O. Olabisi, Polymer-Polymer Miscibility, Acad. Press 1979, Kapitel 1). In der Praxis bedeutet dies, daß die Tendenz zur Delaminierung in mehrphasigen Polymersystemen reduziert wird. Die Verwendung eines Haftvermittlers $a_4$) empfiehlt sich insbesondere dann, wenn als Komponente $a_2$) ein unmodifizierter Polyphenylenether eingesetzt wurde. Bei der Verwendung eines modifizierten Polyphenylenethers $a_2$) wird bevorzugt kein Haftvermittler $a_4$) eingesetzt.

Als Haftvermittler kommen Dienpolymere wie flüssiges Polybutadien, Polyisopren, Poly-1,3-pentadien oder deren Copolymere mit Styrol, α-Methylstyrolund p-Hydroxystyrol mit einem Zahlenmittel des Molekulargewichtes von 150 bis 10000 in Betracht.

Weiterhin geeignet sind Epoxidharze aus Epichlorhydrin und Polyhydroxyphenolen wie Bisphenol A, Hydrochinon oder Resorcin sowie Glycidethermodifizierte Phenol- oder Kresolnovolake, Phenoxyharze. Ebenso können Epoxidharze aus Epichlorhydrin und Polyhydroxyalkoholen wie Ethylen-, Propylen- oder Butylenglykol, Polyethylenglykol, Polypropylenglykol, Glycerin, Trimethylolethan und Pentaerythrit sowie Glycidether von Phenolen oder aliphatischen Alkoholen, Glycidylderivate von Aminen z.B. das Diglycidylderivat von Anilin verwendet werden. Außerdem können epoxidierte natürliche ungesättigte Öle und Epoxidierungsprodukte der oben erwähnten niedermolekularen Dienpolymeren eingesetzt werden.

Auch Verbindungen, die im Molekül mindestens eine C-C-Doppel- oder -Dreifachbindung und mindestens eine Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppe aufweisen, können als Haftvermittler $a_4$) eingesetzt werden. Solche Stoffe werden z.B. in der EP-A 24 120 beschrieben. Geeignete Verbindungen sind z.B. Maleinsäureanhydrid, Maleinsäurehydrazid, Dichlormaleinsäureanhydrid, Maleinimid, Maleinsäure, Fumarsäure, deren Amide, Diamide, Monoester, Diester, Bisamide oder Bismaleinimide von $C_1$- bis $C_{20}$-Alkan- oder Arylendiaminen, natürliche Fette und Öle wie Sojabohnenöl, ungesättigte Säuren, wie Acrylsäure oder Methacrylsäure, deren Ester, Amide oder Anhydride, ungesättigte Alkohole, wie Allyl- oder Crotylalkohol, Methylvinylcarbinol oder Propargylalkohol, ungesättigte Amine wie Allyl- oder Crotylamin oder Addukte aus den Dienpolymeren und Maleinsäureanhydrid.

Als Haftvermittler $a_4$) kommen weiterhin vinylaromatische Polymere, deren Monomere zumindest teilweise eine Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppe aufweisen, in Mengen von 2 bis 30, insbesondere 2 bis 15 Gew.-% in Betracht. Diese Polymeren werden durch Copolymerisation von vinylaromatischen Monomeren, wie Styrol, α-Methylstyrol oder p-Methylstyrol mit den genannten copolymerisierbaren funktionalisierten Monomeren oder durch Aufpfropfen dieser Monomeren auf vinylaromatische Polymere wie Polystyrol erhalten. Solche Verträglichkeitsvermittler sind z.B. aus den Schriften EP-A 46 040, EP-A 147 874, EP-A 255 184, DE-A 3 535 273 oder DE-A 3 619 224 bekannt. Geeignet sind auch Styrolmaleinsäurecopolymere oder mit Maleinsäureanhydrid modifizierte, gegebenenfalls teilhydrierte Styrol-Butadien-Blockcopolymere.

Als Komponente $a_4$) können weiterhin oxidierte Polyolefine gemäß EP-A 164 767 verwendet werden.

Ebenfalls geeignet sind 0,05 bis 10 Gew.-% Siliciumverbindungen, die im Molekül mindestens eine Si-O-C-Gruppe und eine C-C-Doppel-, C-C-Dreifachbindung oder eine nicht direkt an Si gebundene Amino- oder Merkaptogruppe aufweisen wie γ-Aminopropyl-triethoxy-silan oder Vinyl-tris-(2-methoxyethoxy)silan. Solche Verbindungen sind aus der EP-A 182 163 bekannt.

Die mehrphasigen Polymermischungen A) können weiterhin Flammschutzmittel $a_5$) enthalten.

Es kommen alle bekannten Flammschutzmittel in Betracht, wie z.B. Polyhalogendiphenyl, Polyhalogendiphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2,6,2',6'-Tetrabrombisphenols A der Tetrabromphthalsäure, des 2,6-Dibromphenols und 2,4,6-Tribromphenols und deren Derivate.

Ein bevorzugtes Flammschutzmittel ist elementarer Phosphor. In der Regel kann der elementare Phosphor mit z.B. Polyurethanen oder anderen Aminoplasten phlegmatisiert oder gecoatet werden. Außerdem sind Konzentrate von rotem Phosphor z.B. in einem Polyamid, Elastomeren oder Polyolefin geeignet.

Besonders bevorzugt ist 1,2,3,4,7,8,9,10,13,13,14,14-Dodecachloro-1,4,4a,5,6,6a,7,10,10a,11,12,12a-dodecahydro-1,4:7,10-dimethanodibenzo(a,e)-cyclooctan (Dechlorane®Plus, Occidental Chemical Corp.) und gegebenenfalls einem Synergisten z.B. Antimontrioxid.

Weitere Phosphorverbindungen wie organische Phosphorsäure, Phosphinate, Phosphonate, Phosphinite, Phosphinoxide, Phosphine, Phosphite

oder Phosphate sind ebenfalls bevorzugt. Als Beispiel sei Triphenylphosphinoxid genannt. Dieses kann allein oder vermischt mit rotem Phosphor verwendet werden.

Typische für die bevorzugten Phosphorverbindungen, die gemäß in der vorliegenden Erfindung verwendet werden können, sind solche der folgenden allgemeinen Formel

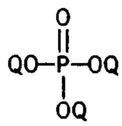

worin Q für gleiche oder verschiedene Reste Kohlenwasserstoffreste, wie Alkyl, Cycloalkyl, Aryl, alkylsubstituiertes Aryl und arylsubstituiertes Alkyl steht, ferner Halogen, Wasserstoff und deren Kombinationen, vorausgesetzt, daß mindestens einer der für Q stehenden Reste ein Arylrest ist. Beispiele solcher geeigneter Phosphate sind z.B. die folgenden: Phenylbisdodecylphosphat, Phenylbisneopentylphosphat, Phenylethylenhydrogenphosphat, Phenyl-bis-(3-5,5'-trimethylhexylphosphat), Ethyldiphenylphosphat, 2-Ethylhexyldi(p-tolyl)phosphat, Diphenylhydrogenphosphat, Bis-(2-ethylhexyl)-phenylphosphat, Tri(nonylphenyl)phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit Triphenylphosphinoxid bevorzugt.

Als Flammschutzmittel sind auch solche Verbindungen geeignet, die Phosphor-Stickstoff-Bindungen enthalten, wie Phopshonnitrilchlorid, Phosphorsäureesteramide, Phosphorsäureesteramine, Phosphorsäureamide, Phosphonsäureamide, Phosphinsäureamide, Tris(Aziridinyl)-phosphinoxid oder Tetrakis(hydroxymethyl)phosphoniumchlorid. Diese entflammungshemmenden Additive sind größtenteils im Handel erhältlich.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N'-Ethylenbistetrabromphthalimid Bedeutung erlangt.

Neben den wesentlichen Komponenten $a_1$), $a_2$) und $a_3$) sowie gegebenenfalls $a_4$) und $a_5$) können die mehrphasigen Polymermischungen A) übliche Zusatzstoffe und Verarbeitungshilfsmittel enthalten. Deren Anteil beträgt im allgemeinen bis zu 20, vorzugsweise bis zu 10 Gew.-%, bezogen auf das Gesamtgewicht der Komponenten $a_1$) bis $a_5$).

Übliche Zusatzstoffe sind beispielsweise Stabilisatoren und Oxidationsinhibitoren, Mittel gegen Wärmezersetzung und Zersetzung durch ultraviolettes Licht, Gleit- und Entformungsmittel, Farbstoffe, Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Weitere Zusatzstoffe sind Pigmente zur Einfärbung der Produkte. Als Weißpigment hat sich in den erfindungsgemäßen faserverstärkten thermoplastischen Formmassen besonders ein Zinksulfid-Pigment (Sachtolith® der Fa. Sachtleben) bewährt.

Materialien zur Erhöhung der Abschirmung gegen elektromagnetische Wellen wie Metallflocken, -pulver, -fasern, metallbeschichtete Füllstoffe können mitverwendet werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors, Aluminiums und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Die Herstellung der mehrphasigen Polymermischung A) erfolgt durch Mischen in an sich bekannter Weise, weshalb sich hier detaillierte Angaben erübrigen. Vorzugsweise werden die Komponenten $a_1$) bis $a_3$) und ggf. $a_4$) und $a_5$) bei Temperaturen von 250 bis 370°C bevorzugt in einem Extruder gemischt, extrudiert und granuliert.

Als Komponente B) enthalten die erfindungsgemäßen Formmassen 5 bis 35 Gew.-%, vorzugsweise 8 bis 32 Gew.-% Glas- oder Kohlenstoff-Fasern oder deren Mischungen.

Wesentlich ist bei der erfindungsgemäßen Komponente B) die mittlere Faserlänge $\overline{l_{50}}$ im Granulat oder im Formkörper, da die Formkörper, wie es gewünscht wird, ein sehr gutes Gesamtprofil der mechanischen Eigenschaften aufweisen, wenn die mittlere Faserlänge $\overline{l_{50}}$ 100 bis 400 µm, bevorzugt von 120 bis 300 µm und insbesondere von 140 bis 280 µm beträgt.

Als mittlere Faserlänge $\overline{l_{50}}$ wird im allgemeinen der Wert bezeichnet, bei dem 50 % der Fasern eine kleinere und 50 % der Fasern eine größere Länge als der $\overline{l_{50}}$-Wert aufweisen.

Die Glasfasern können sowohl alkalimetallhaltig als auch frei von Alkalimetallen sein. Bei der Verwendung von Glasfasern können diese zur besseren Verträglichkeit mit der mehrphasigen Polymermischung A) mit einer Schlichte, z.B. Polyurethan oder Epoxid und einem Haftvermittler, z.B. Aminotrialkoxisilanen ausgerüstet sein. Im allgemeinen haben die verwendeten Fasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen.

Die erfindungsgemäßen faserverstärkten thermoplastischen Formmassen enthalten vorzugsweise weder ein gesättigtes Dicarbonsäurediamid noch Anthranilsäureamid, da die Einarbeitung dieser Verbindungen i.a. negative Auswirkungen auf die Festigkeit, Zähigkeit und Reißdehnung der Formmassen hat.

Zur Herstellung der erfindungsgemäßen faserverstärkten Formmassen wird die Komponente A), vorzugsweise in einem heizbaren Mischaggregat, bei Temperaturen von 250 bis 370°C, bevorzugt von 260 bis 350°C, aufgeschmolzen. Es können kontinuierlich oder batchweise arbeitende Aggregate eingesetzt werden, beispielsweise seien Banburry-Mixer, Buss-Cokneter sowie Ein- oder Zweiwellenextruder genannt, wobei Zweiwellenextruder besonders bevorzugt sind. Der Drehsinn der einzelnen Schnecken kann gleichsinnig oder gegenläufig sein, die Schnecken können kämmend oder nichtkämmend ausgelegt sein. Geeignete Mischaggregate sind dem Fachmann bekannt. In die Schmelze der Komponente A) werden dann die Glas- oder Kohlenstoffasern (Komponente B)) als Endlosfasern (rovings) oder als Faserschnitzel (chopped strang) eingearbeitet. Die Faserschnitzel weisen dabei i.a. Längen von 2 bis 8 mm auf. Dabei kann zusätzlich Wasser zudosiert werden, um das Einzugsverhalten zu verbessern. Unter dem Einfluß von Scherwirkungen werden die Fasern auf eine mittlere Länge von 100 bis 400 µm gekürzt. Anschließend wird als Strang extrudiert und granuliert. Die Granulierung kann sowohl im heißen als auch im abgekühlten Zustand erfolgen. Bei einer bevorzugten Ausführungsform wird die Schmelze vor dem Austrag durch Anlegen eines Vakuums von 0,8 bis 0,02 bar, bevorzugt 0,4 bis 0,1 bar, entgast.

Die erfindungsgemäßen faserverstärkten thermoplastischen Formmassen zeichnen sich durch gute Zähigkeit, Festigkeit und Reißdehnung aus.

Beispiele

Es wurden folgende Komponenten eingesetzt:

$a_1/1$ Polyamid 66 mit einer Viskositätszahl von 143 $cm^3/g$, gemessen an einer 0,5 gew.-%igen Lösung in konzentrierter Schwefelsäure bei 25°C (Ultramid® A3 der BASF AG)

$a_1/2$ Polyamid 6 mit einer Viskositätszahl von 187 $cm^3/g$, gemessen an einer 0,5 gew.-%igen Lösung in konzentrierter Schwefelsäure bei 25°C (Ultramid® B35 der BASF AG)

$a_2$ Ein modifizierter Polyphenylenether, der folgendermaßen hergestellt wurde: 90 Gew.-% eines Poly(2,6-dimethyl-1,4-phenylen)-ethers mit einer Viskosität $\eta_{red.}$ von 0,58 dl/g (gemessen an einer 1 gew.-%igen Lösung in Chloroform bei 25°C), 9 Gew.-% eines Polystyrols mit einem Schmelzindex MFI (Melt Flow Index) von 22 g/10 min (200°C, 5 kg Belastung) sowie 0,95 Gew.-% Fumarsäure und 0,05 Gew.-% 3,3,4,4-Tetraphenylhexan als Radikalstarter wurden in einem Zweischneckenextruder mit einem Verhältnis von Länge:Durchmesser von 20:1 bei einer Zylindertemperatur von 280°C gemischt. Die Schmelze wurde entgast, als Strang extrudiert, gekühlt und granuliert.

$a_3/1$ Ein Dreiblockkautschuk (Styrol-Butadien-Styrol) mit einem Styrolgehalt von 31 Gew.-% und einem mittleren Molekulargewicht (Gewichtsmittelwert) von 72000 (bestimmt mittels GPC (Gel-Permeations-Chromatographie in Tetrahydrofuran bei 25°C) (Cariflex® TR 1102 der Shell AG)

$a_3/2$ Ein mit Maleinsäureanhydrid modifizierter EP-Kautschuk mit einem Schmelzindex MFI (Melt Flow Index) von 9 g/10 min (230°C, 10 kg Belastung) und einem Maleinsäureanhydridgehalt von 0,7 Gew.-% (Exxelor® VA1801 der Exxon Chem.)

B/1 Endlosglasfaser mit einer Polyurethanschlichte und einem mittleren Faserdurchmesser von 13 µm

B/2 Kohlenstoffaser mit einer mittleren Länge von 6 mm und einem mittleren Faserdurchmesser von 7 µm

Beispiele 1 bis 5

In einem gleichsinnig laufenden, kämmenden Zweischneckenextruder (ZSK 53 von Werner & Pfleiderer) wurden zur Herstellung der Komponenten A) die Komponenten a) bei einer Temperatur von 280 °C (Zylindertemperatur: 80 °C) aufgeschmolzen und vermischt, die Schmelze wurde entgast, als Strang extrudiert, gekühlt und granuliert. In einem zweiten Extruderschritt wurden die Komponenten A) ebenfalls auf einem Zweischneckenextruder (ZSK 53 von Werner & Pfleiderer) bei einer Temperatur von 280 °C wieder aufgeschmolzen, dann die Komponenten B) zudosiert und vermischt. Die Schmelze wurde entgast, als Strang extrudiert, gekühlt und granuliert.

Vergleichsbeispiel V1

Es wurde wie in den Beispielen 1 bis 5 gearbeitet, jedoch gleichzeitig mit der Komponente A) Adipinsäurediamid (ADA) zudosiert (in Anlehnung an das in der EP-A 369 312 beschriebene Verfahren).

Vergleichsbeispiele V2 und V3

Es wurde analog zu den Beispielen 1 bis 5 gearbeitet, jedoch wurden die Komponenten B) nicht in einem zweiten Extruderschritt zu den Komponenten A) zugemischt, sondern bei der Herstellung von A) sofort eingearbeitet (in Anlehnung an das in der EP-A 302 485 beschriebene Verfahren).

Die Zusammensetzungen und Eigenschaften der Abmischungen sind in der Tabelle zusammengestellt.

Zur Bestimmung der Eigenschaften wurden die Granulate bei 80 °C über einen Zeitraum von 8 Stunden getrocknet und dann durch Spritzguß bei 280 °C zu Normprüfkörpern verarbeitet.

Der Kerbschlagzähigkeit ($a_k$) wurde nach DIN 53 453 bei 23 °C bestimmt, die Reißdehnung ($\epsilon_R$) nach DIN 53 455 bei 23 °C, die Streckspannung ($\sigma_S$) ebenfalls nach DIN 53 455 bei 23 °C und der Elastizitätsmodul (E-Modul) nach DIN 53 457.

Die Bestimmung der mittleren Faserlänge $\overline{l_{50}}$ erfolgte am Granulat. Bei der Verwendung von Glasfasern wurden 1,5 kg Granulat bei 500 °C verascht, wurden Kohlenstoffasern verwendet, so wurde das Granulat in einer Mischung aus Chloroform und Hexafluorisopropanol (Gew.-Verhältnis 7:3) bei 45 °C aufgelöst. Die zurückbleibenden Fasern wurden in allen Fällen in Mineralöl dispergiert und unter dem Lichtmikroskop (40:1 Vergrößerung) ausgemessen und ausgezählt. Für jede mittlere Faserlängenbestimmung wurden mindestens 500 Fasern ausgemessen.

Tabelle

| Beispiel | Zusammensetzung [Gew.-%] | | | | | | | | | | | | |
|---|---|---|---|---|---|---|---|---|---|---|---|---|---|
| | $a_1/1$ | $a_1/2$ | $a_2$ | $a_3/1$ | $a_3/2$ | B/1 | B/2 | ADA | $a_k$ [kJ/m2] | $\epsilon_R$ [%] | $\sigma_S$ [N/mm2] | E-Modul [N/mm2] | $\overline{l_{50}}$ [µm] |
| 1 | 30,8 | - | 32,2 | 7,0 | - | 30 | - | - | 49 | 3,6 | 180 | 9000 | 240 |
| 2 | 35,2 | - | 36,8 | 8,0 | - | 20 | - | - | 49 | 3,9 | 144 | 6600 | 270 |
| 3 | 39,6 | - | 41,4 | 9,0 | - | 10 | - | - | 50 | 5,4 | 103 | 4200 | 315 |
| 4 | 30,8 | - | 32,2 | 7,0 | - | - | 30 | - | 39 | 3,1 | 215 | 20000 | 265 |
| 5 | - | 35,2 | 36,8 | 4,8 | 3,2 | 20 | - | - | 53 | 4,1 | 134 | 6300 | 270 |
| V1 | 38,7 | - | 40,5 | 8,8 | - | 10 | - | 2 | 32 | 5,3 | 65 | 4200 | 410 |
| V2 | 30,8 | - | 32,2 | 7,0 | - | 30 | - | - | 50 | 3,2 | 165 | 9000 | 240 |
| V3 | 35,2 | - | 36,8 | 8,0 | - | 20 | - | - | 47 | 3,4 | 135 | 6600 | 265 |

**Patentansprüche**

1. Faserverstärkte thermoplastische Formmassen, erhältlich durch Aufschmelzen von
   A) 65 bis 95 Gew.-% einer mehrphasigen Polymermischung mit guter Phasenhaftung, enthaltend als wesentliche Komponenten
      $a_1$) 20 bis 78 Gew.-% eines thermoplastischen Polyamids
      $a_2$) 20 bis 78 Gew.-% eines Polyphenylenethers
      $a_3$) 2 bis 15 Gew.-% eines schlagzäh modifizierenden Polymeren
      $a_4$) 0 bis 35 Gew.-% eines Haftvermittlers
      $a_5$) 0 bis 20 Gew.-% eines Flammschutzmittels
   und anschließender Einarbeitung von
   B) 5 bis 35 Gew.-% Glas- oder Kohlenstoffasern,
   wobei die mittlere Faserlänge der Komponente B) nach der Einarbeitung 100 bis 400 µm beträgt.

2. Faserverstärkte thermoplastische Formmassen nach Anspruch 1, dadurch gekennzeichnet, daß die mittlere Faserlänge der Komponente B) nach der Einarbeitung 150 bis 350 µm beträgt.

3. Faserverstärkte thermoplastische Formmassen nach den Ansprüchen 1 bis 2, dadurch gekennzeichnet, daß die Komponente $a_2$) ein modifizierter Polyphenylenether ist.

4. Faserverstärkte thermoplastische Formmassen nach Anspruch 3, dadurch gekennzeichnet, daß die Komponente A)

   20 bis 78 Gew.-% $a_1$)
   20 bis 78 Gew.-% $a_2$)
   2 bis 12 Gew.-% $a_3$) und
   0 bis 10 Gew.-% $a_5$)

   enthält.

5. Verfahren zur Herstellung von faserverstärkten thermoplastischen Formmassen gemäß den Verfahrensbedingungen von Anspruch 1.

6. Verwendung der faserverstärkten thermoplastischen Formmassen gemäß den Ansprüchen 1 bis 4 zur Herstellung von Formkörpern.

7. Formkörper, erhältlich aus den faserverstärkten thermoplastischen Formmassen gemäß den Ansprüchen 1 bis 4.

Europäisches Patentamt

# EUROPÄISCHER RECHERCHENBERICHT

Nummer der Anmeldung

EP 92 10 1747

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 407 832 (BASF)<br>--- | | C 08 L 71/12<br>C 08 L 77/00<br>C 08 K 7/04 //<br>(C 08 L 77/00<br>C 08 L 71:12<br>C 08 K 7:04 )<br>(C 08 L 71/12<br>C 08 L 77:00<br>C 08 K 7:04 ) |
| A | EP-A-0 183 195 (BASF)<br>--- | | |
| A | PATENT ABSTRACTS OF JAPAN, Band 248, Nr. 12 [C-511] 13. Juli 1988; & JP-A-63 035 652 (ASAHI CHEM.) 16-02-1988<br>--- | | |
| A | PATENT ABSTRACTS OF JAPAN, Band 344, Nr. 12 [C-528] 16. September 1988, & JP-A-63 101 452 (MITSUBISHI) 06-05-1988<br>----- | | |

RECHERCHIERTE SACHGEBIETE (Int. Cl.5)

C 08 L
C 08 K

Der vorliegende Recherchenbericht wurde für alle Patentansprüche erstellt

| Recherchenort | Abschlußdatum der Recherche | Prüfer |
|---|---|---|
| DEN HAAG | 28-05-1992 | LEROY ALAIN |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)